(19) **Europäisches Patentamt**
**European Patent Office**
**Office européen des brevets**

(11) **EP 4 389 795 A1**

(12) **EUROPEAN PATENT APPLICATION**
published in accordance with Art. 153(4) EPC

(43) Date of publication:
**26.06.2024 Bulletin 2024/26**

(21) Application number: **22858632.7**

(22) Date of filing: **01.08.2022**

(51) International Patent Classification (IPC):
***C08G 65/34*** (2006.01)   ***C08G 65/46*** (2006.01)

(86) International application number:
**PCT/KR2022/011292**

(87) International publication number:
**WO 2023/022393 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2021 KR 20210108049**

(71) Applicant: **SK Chemicals Co., Ltd.**
**Seongnam-si, Gyeonggi-do 13494 (KR)**

(72) Inventors:
• **CHUNG, Jae-Il**
**Seongnam-si, Gyeonggi-do 13494 (KR)**
• **CHO, Han-Gyeol**
**Seongnam-si, Gyeonggi-do 13494 (KR)**
• **CHO, Hyun Jun**
**Seongnam-si, Gyeonggi-do 13494 (KR)**

(74) Representative: **Berggren Oy**
**P.O. Box 16**
**Eteläinen Rautatiekatu 10A**
**00101 Helsinki (FI)**

(54) **POLYTRIMETHYLENE ETHER GLYCOL AND PREPARATION METHOD THEREFOR**

(57)    According to this invention, there are provided polytrimethylene ether glycol having low moisture content and narrow polydispersity and a method for preparation thereof.

**EP 4 389 795 A1**

## Description

**[Technical Field]**

This invention relates to polytrimethylene ether glycol and a method for preparation thereof.

**[Background Art]**

Polyurethane is polymer resin prepared by the reaction of isocyanate and polyol, and can be applied for most uses for which polymer is applied, such as coating, adhesive, fiber, plastic and elastic foamed body. However, polyurethane industries have so far relied on crude oil-based value chain and encountered new challenge due to worldwide weather change and environmental pollution by plastic, and thus, attempts are being made to use renewable biomass resources to reduce greenhouse gases.

Polyol, which is main raw material of polyurethane, may be largely classified into ester type and ether type, and the industrial application of polyol using biomass-based raw material has been so far limited to ester type. However, the industrial application of ether type occupying 70% or more of the amount of polyol for polyurethane is extremely limited due to the limitation of properties and cost.

Polytrimethylene ether glycol using 1,3-propanediol(1,3-PDO) derived from biomass as raw material is most practical alternative to ether type polyol to reduce greenhouse gases, and studies on industrial application of PO3G have been so far progressed.

Furthermore, it was confirmed that polyurethane polymer applying PO3G has excellent properties of elastic recovery, abrasion resistance, and the like, compared to the existing polyurethane applying ether type polyol, and it is expected that the application field of bio polyurethane applying PO3G will expand beyond drop in type bio polymer exhibiting identical properties to petrochemical polymer.

Meanwhile, the polymerization method of PO3G is an alcohol condensation reaction progressed in the presence of a strong acid catalyst, as described in US Patent Registration No. 6,977,291 and US Patent Registration No. 7,745,668, and the polymer growth can be understood as a step growth mechanism.

On the other hand, the polymerization of the existing petrochemical polyalkylene ether glycol is a ring open polymerization reaction, and the polymer growth is progressed by a chain growth mechanism, and due to such a difference, PO3G has broad polydispersity, compared to other alkylene ether polyols.

Meanwhile, with regard to polydispersity, in the case of polyurethane elastomer, polyol having narrow molecular weight is preferred in terms of dynamic properties such as elongation recovery, repetitive compressibility, and the like, and in the case of petrochemical polyalkylene ether glycol represented by PTMG, Korean Laid-Open Patent Publication No. 10-2004-0055677, US Patent Registration No. 4,638,097, Japanese Patent Registration No. 3,352,702, etc. describe depolymerization and phase separation using solubility difference, as a method for lowering dispersion of polyol.

However, in the above suggested method, added water have an important influence on the properties of the final PTMG, and particularly, if the moisture contained in PTMG is not removed to less than 100 ppm, gelation may be caused during the polymerization process of spandex, thus deteriorating quality of spandex. And, since the method requires a post-purification process after depolymerization, and uses organic solvents, equipment for recovering the same and energy cost may be generated, and it may be difficult to industrially apply.

Thus, a method of removing oligomer using thin film evaporation is being commercially used. For example, Korean Laid-Open Patent Publication No. 10-2019-0038162 discloses a method of removing oligomer of polytrimethylene ether glycol using thin film evaporation. However, in the case of polytrimethylene ether glycol, although an alcohol condensation reaction in the presence of an acid catalyst is a main mechanism, various volatile oxidation by-products and cyclic oligomer are also produced together during the polymerization reaction. Thus, components to be removed during the thin film evaporation process may be largely classified into 3 kinds of oxidation by-products, cyclic oligomer and linear oligomer, and these components exhibit different vapor pressures, thus requiring selective distillation method.

In case these components are simultaneously separated according to the method described in Korean Laid-Open Patent Publication No. 10-2019-0038162, oxidation by-products having high vapor pressure and cyclic oligomer are condensed on the surface of the thin film evaporator and are not separated, but are solidified on the surface of trap to induce pipe blocking, and further, even a vacuum pump is evaporated, and thus, stable vacuum degree cannot be maintained, causing quality problem of polytrimethylene ether glycol.

Thus, there is a demand for a stable separation method of oligomer and oxidation by-products for commercialization of polytrimethylene ether glycol.

**[DETAILED DESCRIPTION OF THE INVENTION]**

**[Technical Problem]**

It is an object of the invention to provide polytrimethylene ether glycol having low moisture content and narrow polydispersity.
It is another object of the invention to provide a method for preparation of the polytrimethylene ether glycol.

**[Technical Solution]**

In order to achieve the object, there is provided polytrimethylene ether glycol having polydispersity of 1.5 to 2.1, and moisture content of 100 ppmw or less.
As explained later, when preparing polytrimethylene ether glycol, by purification through primary thin film evaporation and secondary thin film evaporation, polytrimethylene ether glycol according to the invention has narrow polydispersity(Mw/Mn), and low moisture content.
Specifically, polytrimethylene ether glycol according to the invention has polydispersity of 1.5 to 2.1. And, polytrimethylene ether glycol prepared by the method of the invention has moisture content of 100 ppmw or less. Wherein, the 'moisture content' means the weight of moisture included in polytrimethylene ether glycol, based on the total weight of the polytrimethylene ether glycol.
Particularly, polytrimethylene ether glycol may be used for spandex polymerization, wherein moisture included in polytrimethylene ether glycol is a major factor causing gelation during the polymerization process to deteriorate quality of prepared spandex. Thus, polytrimethylene ether glycol according to the invention is characterized in that moisture content can be lowered through primary thin film evaporation and secondary thin film evaporation.
Preferably, polytrimethylene ether glycol according to the invention has polydispersity of 1.6 or more, or 1.7 or more; and 2.0 or less, or 1.9 or less. Preferably, polytrimethylene ether glycol according to the invention has moisture content of 90 ppmw or less, 80 ppmw or less, 70 ppmw or less, 60 ppmw or less, 50 ppmw or less, or 45 ppmw or less. Meanwhile, the theoretical lower limit of the moisture content is 0 ppmw, but for example, it may be 5 ppmw or more, 10 ppmw or more, 15 ppmw or more, or 20 ppmw or more.
And, polytrimethylene ether glycol according to the invention has number average molecular weight of 1500 to 3000, more preferably 1600 or more, 1700 or more, or 1800 or more; and 2900 or less, 2800 or less, 2700 or less, 2600 or less, or 2500 or less.
And, polytrimethylene ether glycol according to the invention has a 1,3-propanediol content of 100 ppmw or less. Wherein, the '1,3-propanediol content' means the weight of 1,3-propanediol included in polytrimethylene ether glycol, based on the total weight of the polytrimethylene ether glycol.
Preferably, polytrimethylene ether glycol according to the invention has a 1,3-propanediol content of 90 ppmw or less, 80 ppmw or less, 70 ppmw or less, 60 ppmw or less, 50 ppmw or less, 40 ppmw or less, 30 ppmw or less, 20 ppmw or less, 10 ppmw or less, or 5 ppmw or less.
According to the invention, there is also provided a method for preparing the above explained polytrimethylene ether glycol comprising steps of:

polymerizing 1,3-propanediol to prepare a product comprising polytrimethylene ether glycol (step 1);
conducting thin film evaporation of the product of step 1 under conditions of a temperature of 100 to 250°C, and a pressure of 100.0 to 10.0 torr (step 2); and
conducting thin film evaporation of the evaporation residue of step 2 under conditions of a temperature of 150 to 350°C, and a pressure of 1.0 to 0.001 torr (step 3).

This invention is intended to remove linear oligomer, cyclic oligomer and oxidation by-products generated during the preparation of polytrimethylene ether glycol by stages, thereby securing operation efficiency of the purification process of polytrimethylene ether glycol, and simultaneously, lowering moisture content as much as possible, and preparing polytrimethylene ether glycol having narrow polydispersity.
For this purpose, after preparing polytrimethylene ether glycol in step 1, by conducting thin film evaporation twice under different conditions as in the steps 2 and 3, linear oligomer, cyclic oligomer and oxidation by-products are removed by stages.
Hereinafter, the inventio will be explained according to step.

**(Step 1)**

The step 1 of the invention is a step wherein 1,3-propanediol is polymerized to prepare a product comprising polytrimethylene ether glycol.

The reaction conditions of the step 1 are not specifically limited as long as polytrimethylene ether glycol is prepared from 1,3-propanediol, and preferably, polytrimethylene ether glycol is prepared by polycondensation of 1,3-propanediol using a polycondensation catalyst.

Specifically, the polycondensation catalyst is selected from the group consisting of Lewis acid, Bronsted acid, super acid and a mixture thereof. More preferably, the catalyst is selected from the group consisting of inorganic acid, organic sulfonic acid, heteromultivalent acid, and metal salt. Most preferably, the catalyst is selected from the group consisting of sulfuric acid, fluorosulfonic acid, phosphoric acid, p-toluenesulfonic acid, benzenesulfonic acid, phosphotungstic acid, phosphomolybdic acid, trifluoromethansulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate and zirconium triflate. The catalyst is also selected from the group consisting of zeolite, fluorinated alumina, acid-treated silica, acid-treated silica-alumina, heteromultivalent acid, and heteromultivalent acid supported on zirconia, titania, alumina and/or silica. More preferably, as the polycondensation catalyst, sulfuric acid is used.

It is preferable that the catalyst is used at the concentration of 0.1 to 20 wt%, based on the weight of the reaction mixture, more preferably 1 wt% or more, 2 wt% or more, 3 wt% or more, or 4 wt% or more; and 15 wt% or less, 10 wt% or less, or 5 wt% or less.

And, preferably, the polycondensation is conducted at 150°C to 250°C, more preferably 160°C to 220°C. And, it is preferable that the reaction is conducted in the presence of inert gas, preferably under nitrogen.

Meanwhile, it is preferable that the reaction is conducted until the number average molecular weight of polytrimethylene ether glycol prepared in the step 1 becomes 1500 to 3000, and specifically, it is preferable that the reaction is conducted for 1 hour to 48 hours.

Meanwhile, after the polycondensation, in order to remove acid bonded to polytrimethylene ether glycol, a hydrolysis reaction may be additionally progressed. And, following the hydrolysis reaction, a neutralization reaction may be additionally progressed.

**(Step 2)**

The step 2 of the invention is a step for first removing highly volatile components included in the product of the step 1 by primary thin film evaporation of the product of step 1.

Unlike the secondary thin film evaporation of step 3 described later, in order to first remove highly volatile components, the thin film evaporation of step 2 is conducted under conditions of a temperature of 100 to 250°C, and a pressure of 100.0 to 10.0 torr, and compared to the thin film evaporation conditions of step 3 described later, the temperature is equivalent or relatively low, and the pressure is relatively high. Namely, compared to the thin film evaporation conditions of step 3 described later, highly volatile components can be preferentially removed through the step 2.

Meanwhile, as used herein, the term 'thin film evaporation' means a method of distillation by making a mixture to be separated in the form of a thin film to increase the surface area contacting a heat source. For example, thin film evaporation is enabled in such a way that a mixture introduced in a thin film evaporator forms a thin film on the inner wall surface of the thin film evaporator by physical force (for example, wiper), and an appropriate temperature is applied thereto through a heat source(for example, heating media) to evaporate. And, if a pressure inside a thin film evaporator is lowered, vapor pressure of material may decrease, and thus, evaporation may occur at a temperature lower than the original boiling point. And, inside the thin film evaporator, a condenser for recovering evaporated material, namely, material to be removed, may be equipped.

Moreover, the thin film evaporation has an advantage in that a mixture to be separated may be continuously applied. For example, continuous thin film evaporation is enabled in such a way that a mixture to be separated is continuously introduced at the upper part of the evaporator, and the purified mixture is recovered at the lower part of the evaporator.

The thin film evaporation of step 2 is conducted at a temperature of 100 to 250°C, preferably 110°C or more, 120°C or more, 130°C or more, 140°C or more, 150°C or more, 160°C or more, 170°C or more, or 180°C or more; and 240°C or less, or 230°C or less. If the temperature is less than 150°C, the effect of evaporation may be slight, and thus, it may be difficult to remove material to be removed, and if the temperature is greater than 250°C, there is a concern about generation of thermal oxidation of polytrimethylene ether glycol.

The thin film evaporation of the step 2 is conducted at a pressure of 100.0 to 10.0 torr, preferably 90.0 torr or less, 80.0 torr or less, 70.0 torr or less, 60.0 torr or less, or 50.0 torr or less, and 15.0 torr or more, or 20.0 torr or more. If the pressure is greater than 100.0 torr, separation efficiency may be lowered, and if the pressure is less than 10.0 torr, volatile materials such as cyclic oligomer, water, and the like may be condensed on the surface of the thin film evaporator, and thus, may not be separated but solidified on the surface of trap, thus causing blocking of pipe.

Meanwhile, the components evaporated in the thin film evaporator, namely, materials to be removed, may be discharged to the lower part of the thin film evaporator through the condenser, and thereby, residual purified mixture, namely, evaporation residue may be separately recovered.

**(Step 3)**

The step 3 of the invention is a step for preparing polytrimethylene ether glycol having narrow polydispersity and low moisture content, by further purification of polytrimethylene ether glycol by secondary thin film evaporation of the product purified before by thin film evaporation in step 2.

Since highly volatile components have been removed through the above-explained primary thin film evaporation of step 2, in the thin film evaporation conditions of step 3, the temperature is relatively high, and the pressure is relatively low, compared to the thin film evaporation conditions of step 2. Thereby, the product may be purified to polytrimethylene ether glycol having narrow polydispersity, and simultaneously, moisture may be removed to lower the moisture content of polytrimethylene ether glycol.

The thin film evaporation of step 3 is conducted at a temperature of 150 to 300°C, preferably 160°C or more, 170°C or more, 180°C or more, 190°C or more, or 200°C or more; and 290°C or less, 280°C or less, or 270°C or less. If the temperature is less than 150°C, the effect of evaporation may be slight, and thus, it may be difficult to remove material to be removed, and if the temperature is greater than 300°C, there is a concern about generation of thermal oxidation of polytrimethylene ether glycol.

Preferably, the temperature of the thin film evaporation of step 3 is equal to or higher than the temperature of the thin film evaporation of step 2.

The thin film evaporation of step 3 is conducted at a pressure of 1.0 to 0.0001 torr, preferably 0.9 torr or less, 0.8 torr or less, 0.7 torr or less, 0.6 torr or less, 0.5 torr or less, 0.4 torr or less, 0.3 torr or less, 0.2 torr or less, or 0.1 torr or less, and 0.001 torr or more, or 0.01 torr or more. If the pressure is greater than 1.0 torr, separation efficiency may be lowered, and thus, aimed polydispersity may not be achieved, and if the pressure is less than 0.0001 torr, separation efficiency may become excessively high, and thus, even components that should remain in the product may be separated, and thus, yield of the final product may be lowered.

**[ADVANTAGEOUS EFFECTS]**

As explained above, polytrimethylene ether glycol and a method for preparation thereof according to the invention enables provision of polytrimethylene ether glycol having low moisture content and narrow polydispersity.

**[DETAILED DESCRIPTION OF THE EMBODIMENTS]**

Hereinafter, embodiments of the invention will be explained in more detail in the following Examples. However, these examples are presented only as the illustrations of the invention, and the invention is not limited thereby.

In the following Preparation Examples, Examples and Comparative Examples, properties were measured as follows.

1) Polydispersity(Mw/Mn), and total oligomer content(wt%)

Polytrimethylene ether glycol prepared in each Example was dissolved in THF(tetrahydrofuran) at the concentration of 1 wt%, and using gel permeation chromatography(manufacturer: WATERS, model: Alliance, Detecter : 2414 RI Detector, Column: Strygel HR 0.5/1/4), weight average molecular weight(Mw) and number average molecular weight(Mn) were respectively calculated with polyethylene glycol as standard material. From the Mw and Mn measured, polydispersity value and the content of low molecular weight oligomer having Mn of 400 or less were calculated.

2) 1,3-PDO content(wt%), and cyclic oligomer content(wt%)

0.5 g of polytrimethylene ether glycol prepared in each Example was dissolved in 10 mL of methanol, and measured with gas chromatography(model : agilent 7890, column : DBWAX), and 1 g of each reference material was dissolved in 10 mL of methanol, and then, additionally diluted according to concentration and measured as standard reference, and 1,3-PDO content(wt%) and cyclic oligomer content(wt%) included in polytrimethylene ether glycol were calculated.

3) OHV

6 g of polytrimethylene ether glycol prepared in each Example and 15 mL of acetylation agent(acetic anhydride/ pyridine = 10/40 vol%) were introduced in a 100 mL flask, and reacted at 100°C for 30 minutes under reflux atmosphere.

After the reaction, the reaction mixture was cooled to a room temperature, and 50 mL of distilled water was introduced. The prepared reaction mixture was subjected to a titration reaction with 0.5 N KOH using an automatic titrator (manufacturer: metrohm, Titrino 716), and OHV was calculated according to the following Mathematical Formula 1.

$$[\text{Mathematical Formula 1}]$$

$$\text{OHV} = 56.11 \times 0.5 \times (A - B) \,/\text{amount of sample introduced}$$

In the Mathematical Formula 1,

56.11 means the molecular weight of KOH,
0.5 means the normality of KOH,
A is the dispensing volume of KOH solution used for blank test,
B is the dispensing volume of KOH solution used for sample titration.

The measured OHV was converted into end group average molecular weight(Mn) according to the following Mathematical Formula 2.

$$[\text{Mathematical Formula 2}]$$

$$\text{Mn} = (56.11 \times 2 \,/\, \text{OHV}) \times 1000$$

4) Moisture content

0.5 g of polytrimethylene ether glycol prepared in each Example was introduced in volumertric Karl fisher Titrator(Mettler compact V20S), and a moisture content in the sample was measured.

**Preparation Example: Preparation of polyol**

**1) Preparation of polyol A**

(Step a)

In a 20 L glass double jacket reactor equipped with a teflon stirrer and sparger, 1,3-propanediol(15 kg) and sulfuric acid(150 g) were filled, and then, polymer was prepared at 166°C under nitrogen sparging for 23 hours, and the reaction by-products were removed through the upper condenser.

(Step b)

And then, deionized water(5 kg) was added, and the produced mixture was maintained at 95°C for 4 hours under nitrogen blowing, thus hydrolyzing acid ester formed during polymerization. After hydrolysis, 170g of soda ash in 1000 mL of deionized water was added, and the mixture was heated to 80°C while stirring under nitrogen stream. The neutralization was continued for 1 hour, and subsequently, the product was dried at 120°C under reduced pressure, and filtered using a Nutche filter to obtain a polytrimethylene ether glycol product.

**2) Preparation of polyol B**

A polytrimethylene ether glycol product was obtained by the same method as the preparation method of polyol A, except that in the step 1, the reaction time was changed from 23 hours to 25 hours.
The properties of polyol A and polyol B respectively prepared were shown in the following Table 1.

[Table 1]

|  | OHV | End group titration Mn | Poly dispersity | Cyclic Oligomer content (wt%) | Total Oligomer content (wt%) | PDO content (wt%) |
|---|---|---|---|---|---|---|
| polyol A | 73.83 | 1520 | 2.2 | 0.43 | 3.1 | 0.43 |
| polyol B | 64.13 | 1750 | 2.3 | 0.38 | 2.4 | 0.29 |

**Example and Comparative Example**

Using Lab scale thin film evaporation equipment, purification of each polyol prepared in Preparation Examples was conducted.

Specifically, the thin film evaporation equipment was VKL- 70-4 model from VTA company, which is short path distillation type equipped with a condenser inside a distillation column, and has evaporation diameter and surface area of respectively 70 mm and 0.04 m$^2$. Two thin film evaporators were connected in series to conduct purification as follows. After a distillation column jacket was set to an appropriate temperature by hot oil system, and the inside of the column reached a target degree of vacuum by a vacuum pump, each sample prepared above was introduced at the upper part of the first thin film evaporator at an appropriate feed rate. At this time, by a mechanical stirrer equipped with a wiper, polytrimethylene ether glycol is formed as a thin film having uniform thickness in the column, and volatilized low molecular weight materials were condensed in the condenser and discharged toward distillate, and after primarily purified polytrimethylene ether glycol was discharged as residue, it was introduced at the upper part of the second thin film evaporator by a gear pump, thus conducting secondary thin film evaporation, and secondarily purified polytrimethylene ether glycol was discharged as residue.

For each Comparative Example and Example, 1 hour test was conducted at a feed rate of 1 kg/hr, and after the test, it was sampled to measure the properties, and change in the degree of vacuum of the thin film evaporator and contamination of trap were confirmed, and the results were respectively shown in the following Tables 2 and 3.

[Table 2]

|  |  | Unit | Comparative Example 1 | Example 1 | Example 2 | Example 3 | Example 4 | Example 5 |
|---|---|---|---|---|---|---|---|---|
| Feed Polyol |  | - | Polyol | Polyol A | Polyol A | Polyol A | Polyol A | Polyol A |
| Feed rate |  | kg/hr | 1 | 1 | 1 | 1 | 1 | 1 |
| Evap.1 | Evap.1 Temp | °C | 180 | 190 | 200 | 230 | 230 | 250 |
|  | Evap.1 Condenser | wt% | 40 | 50 | 50 | 50 | 50 | 50 |
|  | Evap.1 cold trap Temp. | °C | -25 | -25 | -25 | -25 | -25 | -25 |
|  | Whether or not cold trap was contaminated | - | ○ | X | X | X | X | X |
|  | Evap.1 Vacuum | torr | 0.1 | 30 | 30 | 30 | 50 | 50 |
|  | Evap.1 Distillate | wt% | 2.3 | 0.34 | 0.41 | 0.62 | 0.57 | 0.57 |
|  | Evap.1 Residue | wt% | 97.7 | 99.66 | 99.59 | 99.38 | 99.43 | 99.43 |

(continued)

| | | Unit | Comparative Example 1 | Example 1 | Example 2 | Example 3 | Example 4 | Example 5 |
|---|---|---|---|---|---|---|---|---|
| Evap.2 | Evap.2 Temp | °C | - | 200 | 230 | 250 | 270 | 290 |
| | Evap.2 Condenser | wt% | - | 35 | 35 | 35 | 35 | 35 |
| | Evap.2 cold trap Temp. | °C | - | -24 | -24 | -24 | -24 | -24 |
| | Whether or not cold trap was contaminated | - | ○ | X | X | X | X | X |
| | Evap.2 Vacuum | torr | - | 0.08 | 0.05 | 0.02 | 0.02 | 0.03 |
| | Evap.2 Distillate | wt% | - | 3.2 | 4.9 | 7.2 | 8.3 | 11.2 |
| | Evap.2 Residue | wt% | - | 96.46 | 94.69 | 92.18 | 91.13 | 88.23 |
| OHV | | - | 65.93 | 63.51 | 59.38 | 56.36 | 54.16 | 52.86 |
| Mn | | g/mol | 1702 | 1767 | 1890 | 1991 | 2072 | 2123 |
| Polydispersity | | - | 2.00 | 1.90 | 1.8 | 1.7 | 1.7 | 1.6 |
| Cyclic Oligomer content | | wt% | N.D | N.D | N.D | N.D | N.D | N.D |
| 1,3-PDO content | | wt% | N.D | N.D | N.D | N.D | N.D | N.D |
| total oligomer content | | wt% | 0.24 | 0.18 | 0.11 | 0.07 | 0.02 | <0.01 |
| Moisture content | | ppmw | 130 | 42 | 43 | 41 | 39 | 43 |

[Table 3]

| | | Unit | Comparative Example 2 | Example 6 | Example 7 | Example 8 | Example 9 | Example 10 |
|---|---|---|---|---|---|---|---|---|
| Feed Polyol | | - | Polyol B | Polyol B | Polyol B | Polyol B | Polyol B | Polyol B |
| Feed rate | | kg/hr | 1 | 1 | 1 | 1 | 1 | 1 |
| Evap.1 | Evap.1 Temp | °C | 180 | 190 | 200 | 200 | 230 | 230 |
| | Evap.1 Condenser | wt% | 40 | 50 | 50 | 50 | 50 | 50 |
| | Evap.1 cold trap Temp. | °C | -25 | -25 | -25 | -25 | -25 | -25 |
| | Whether or not cold trap was contaminated | - | ○ | X | X | X | X | X |
| | Evap.1 Vacuum | Torr | 0.2 | 20 | 20 | 30 | 30 | 50 |
| | Evap.1 Distillate | wt% | 1.8 | 0.38 | 0.54 | 0.41 | 0.81 | 0.65 |
| | Evap.1 Residue | wt% | 98.2 | 99.62 | 99.46 | 99.59 | 99.19 | 99.35 |

(continued)

| | | Unit | Comparative Example 2 | Example 6 | Example 7 | Example 8 | Example 9 | Example 10 |
|---|---|---|---|---|---|---|---|---|
| Evap.2 | Evap.2 Temp | °C | - | 190 | 230 | 250 | 270 | 290 |
| | Evap.2 Condenser | wt% | - | 35 | 35 | 35 | 35 | 35 |
| | Evap.2 Vacuum | Torr | - | 0.1 | 0.03 | 0.02 | 0.08 | 0.01 |
| | Evap.2 Distillate | wt% | - | 1.9 | 3.5 | 4.1 | 5.8 | 7.5 |
| | Evap.2 Residue | wt% | - | 97.72 | 95.96 | 95.49 | 93.39 | 91.85 |
| OHV | | - | 57.67 | 56.62 | 50.34 | 49.31 | 47.86 | 46.78 |
| Mn | | g/mol | 1946 | 1982 | 2229.24 | 2275.81 | 2344.76 | 2398.89 |
| Polydispersity | | - | 2.00 | 2.00 | 1.8 | 1.8 | 1.7 | 1.7 |
| Cyclic Oligomer content | | wt% | N.D | N.D | N.D | N.D | N.D | N.D |
| 1,3-PDO content | | wt% | N.D | N.D | N.D | N.D | N.D | N.D |
| total oligomer content | | wt% | 0.14 | 0.11 | 0.07 | 0.02 | <0.01 | <0.01 |
| Moisture content | | Ppmw | 110 | 45 | 42 | 40 | 47 | 37 |

As shown in Tables 2 and 3, when progressing thin film evaporation of polytrimethylene ether glycol, in case primary thin film evaporation is conducted at high vacuum of 1 torr or less so as to obtain narrow polydispersity, oligomer content could be lowered as in Comparative Examples 1 and 2, but low vapor pressure components were precipitated on the surface of cold trap, and thus, the vacuum degree of corresponding process could not be maintained for a long time, and it was difficult to obtain uniform polydispersity. The following Table 4 shows the analysis result of the components of the precipitated contaminants of Comparative Example 2, and it can be confirmed that most of them are cyclic oligomer, 1,3-PDO, linear dimer, trimer having low vapor pressure.

[Table 4]

| | Cyclic Oligomer (C2~C5) | PDO | Linear Dimer, Trimer | Others |
|---|---|---|---|---|
| content(wt%) | 46.20 | 13.2 | 23.20 | 17.40 |

On the other hand, Examples 1 to 9 wherein the above components exhibiting high volatility were purified by primary thin film evaporation under low vacuum, and then, secondary thin film evaporation was conducted, the thin film evaporation process could be progressed without contamination of each cold trap, thereby securing the processability of thin film evaporation for a long time.

And, since most of separation was achieved in a condenser, pressure drop was not generated in the thin film evaporator, thus maintaining high vacuum degree for a long time, thereby securing low moisture content, quality uniformity, and narrow polydispersity of 1.5 to 2.1 of polytrimethylene ether glycol.

**Claims**

1.  Polytrimethylene ether glycol having polydispersity of 1.5 to 2.1, and moisture content of 100 ppmw or less.

2.  The polytrimethylene ether glycol according to claim 1, wherein the polytrimethylene ether glycol has polydispersity of 1.7 to 2.0.

3.  The polytrimethylene ether glycol according to claim 1, wherein the polytrimethylene ether glycol has a moisture content of 45 ppmw or less.

4.  The polytrimethylene ether glycol according to claim 1, wherein the polytrimethylene ether glycol has number average molecular weight of 1500 to 3000.

5.   The polytrimethylene ether glycol according to claim 1, wherein the polytrimethylene ether glycol has a 1,3-propanediol content of 100 ppmw or less.

6.   A method for preparing polytrimethylene ether glycol, comprising steps of:

polymerizing 1,3-propanediol to prepare a product comprising polytrimethylene ether glycol (step 1);
conducting thin film evaporation of the product of step 1 under conditions of a temperature of 100 to 250°C, and a pressure of 100.0 to 10.0 torr (step 2); and
conducting thin film evaporation of the evaporation residue of step 2 under conditions of a temperature of 150 to 350°C, and a pressure of 1.0 to 0.001 torr (step 3).

7.   The method for preparing polytrimethylene ether glycol according to claim 6, wherein the step 1 is conducted in the presence of a catalyst selected from the group consisting of Lewis acid, Bronsted acid, super acid and a mixture thereof.

8.   The method for preparing polytrimethylene ether glycol according to claim 6, wherein the step 1 is conducted at 150°C to 250°C.

9.   The method for preparing polytrimethylene ether glycol according to claim 6, wherein the step 2 is conducted at 180°C to 230°C.

10.   The method for preparing polytrimethylene ether glycol according to claim 6, wherein the step 2 is conducted at 50.0 to 20.0 torr.

11.   The method for preparing polytrimethylene ether glycol according to claim 6, wherein the step 3 is conducted at 200°C to 270°C.

12.   The method for preparing polytrimethylene ether glycol according to claim 6, wherein the temperature of thin film evaporation of step 3 is equal to or higher than the temperature of thin film evaporation of step 2.

13.   The method for preparing polytrimethylene ether glycol according to claim 6, wherein the step 3 is conducted at 0.01 to 0.1 torr.

## INTERNATIONAL SEARCH REPORT

| | International application No. |
|---|---|
| | **PCT/KR2022/011292** |

**A. CLASSIFICATION OF SUBJECT MATTER**

**C08G 65/34**(2006.01)i; **C08G 65/46**(2006.01)i

According to International Patent Classification (IPC) or to both national classification and IPC

**B. FIELDS SEARCHED**

Minimum documentation searched (classification system followed by classification symbols)

C08G 65/34(2006.01); B01D 3/12(2006.01); C07C 41/03(2006.01); C07C 41/09(2006.01); C08G 65/30(2006.01); C08G 65/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리트리메틸렌에테르글리콜(polytrimethylene ether glycol), 분자량분포(Mw/Mn), 다분산도(polydispersity), 수분(water), 박막증류(film-vaporation)

**C. DOCUMENTS CONSIDERED TO BE RELEVANT**

| Category* | Citation of document, with indication, where appropriate, of the relevant passages | Relevant to claim No. |
|---|---|---|
| DY | WO 2019-066310 A1 (SK CHEMICALS CO., LTD.) 04 April 2019 (2019-04-04)<br>See pages 9, 11 and 12; and claims 1, 2, 4 and 5-8. | 1-13 |
| Y | KR 10-2014-0038423 A (E.I.DU PONT DE NEMOURS AND COMPANY) 28 March 2014 (2014-03-28)<br>See claim 1; and paragraphs [0041] and [0052]. | 1-13 |
| A | KR 10-2007-0024607 A (E.I.DU PONT DE NEMOURS AND COMPANY) 02 March 2007 (2007-03-02)<br>See claims 1-24. | 1-13 |
| A | KR 10-0233797 B1 (E. I. DU PONT DE NEMOURS AND COMPANY) 01 December 1999 (1999-12-01)<br>See claims 1-6. | 1-13 |
| A | US 8344098 B2 (HOFFMANN, C. et al.) 01 January 2013 (2013-01-01)<br>See entire document. | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2022** | **07 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011292**

| Patent document cited in search report | | | Publication date (day/month/year) | Patent family member(s) | | | Publication date (day/month/year) |
|---|---|---|---|---|---|---|---|
| WO | 2019-066310 | A1 | 04 April 2019 | CN | 111094392 | A | 01 May 2020 |
| | | | | EP | 3689943 | A1 | 05 August 2020 |
| | | | | JP | 2020-535279 | A | 03 December 2020 |
| | | | | KR | 10-2019-0038162 | A | 08 April 2019 |
| | | | | TW | 201920356 | A | 01 June 2019 |
| | | | | US | 2020-0277437 | A1 | 03 September 2020 |
| KR | 10-2014-0038423 | A | 28 March 2014 | CN | 103492460 | A | 01 January 2014 |
| | | | | CN | 103492460 | B | 11 May 2016 |
| | | | | EP | 2702089 | A2 | 05 March 2014 |
| | | | | EP | 2702089 | B1 | 05 April 2017 |
| | | | | JP | 2014-518852 | A | 07 August 2014 |
| | | | | JP | 5936244 | B2 | 22 June 2016 |
| | | | | KR | 10-1929604 | B1 | 14 December 2018 |
| | | | | TW | 201245277 | A | 16 November 2012 |
| | | | | US | 2012-0277478 | A1 | 01 November 2012 |
| | | | | US | 8884073 | B2 | 11 November 2014 |
| | | | | WO | 2012-148849 | A2 | 01 November 2012 |
| | | | | WO | 2012-148849 | A3 | 28 March 2013 |
| KR | 10-2007-0024607 | A | 02 March 2007 | CA | 2565353 | A1 | 26 January 2006 |
| | | | | CN | 1968916 | A | 23 May 2007 |
| | | | | EP | 1756028 | A1 | 28 February 2007 |
| | | | | JP | 2008-503486 | A | 07 February 2008 |
| | | | | TW | 200613258 | A | 01 May 2006 |
| | | | | US | 2005-0283028 | A1 | 22 December 2005 |
| | | | | US | 7074969 | B2 | 11 July 2006 |
| | | | | WO | 2006-009857 | A1 | 26 January 2006 |
| KR | 10-0233797 | B1 | 01 December 1999 | EP | 0629218 | A1 | 21 December 1994 |
| | | | | JP | 07-505178 | A | 08 June 1995 |
| | | | | KR | 10-1995-7000346 | A | 16 January 1995 |
| | | | | US | 5282929 | A | 01 February 1994 |
| | | | | US | 5302255 | A | 12 April 1994 |
| | | | | WO | 93-18083 | A1 | 16 September 1993 |
| US | 8344098 | B2 | 01 January 2013 | CN | 102666651 | A | 12 September 2012 |
| | | | | CN | 102666651 | B | 10 September 2014 |
| | | | | EP | 2516505 | A2 | 31 October 2012 |
| | | | | EP | 2516505 | B1 | 17 September 2014 |
| | | | | JP | 2013-515144 | A | 02 May 2013 |
| | | | | JP | 5714027 | B2 | 07 May 2015 |
| | | | | KR | 10-1791711 | B1 | 30 October 2017 |
| | | | | KR | 10-2012-0112622 | A | 11 October 2012 |
| | | | | TW | 201130913 | A | 16 September 2011 |
| | | | | US | 2011-0152498 | A1 | 23 June 2011 |
| | | | | WO | 2011-084686 | A2 | 14 July 2011 |
| | | | | WO | 2011-084686 | A3 | 13 October 2011 |

Form PCT/ISA/210 (patent family annex) (July 2022)

## REFERENCES CITED IN THE DESCRIPTION

**Patent documents cited in the description**

- US 6977291 B
- US 7745668 B
- KR 1020040055677

- US 4638097 A
- JP 3352702 B
- KR 1020190038162